(19) **Europäisches Patentamt**

**European Patent Office**

**Office européen des brevets**

(11) Veröffentlichungsnummer : **0 448 546 A2**

(12) # EUROPÄISCHE PATENTANMELDUNG

(21) Anmeldenummer : **91890053.1**

(22) Anmeldetag : **21.03.91**

(51) Int. Cl.⁵ : **G06F 15/16**

(30) Priorität : **23.03.90 DE 4009437**

(43) Veröffentlichungstag der Anmeldung :
**25.09.91 Patentblatt 91/39**

(84) Benannte Vertragsstaaten :
**AT CH DE FR GB IT LI SE**

(71) Anmelder : **VOEST-ALPINE AUTOMOTIVE Gesellschaft m.b.H.**
**Dorfflingerstrasse 15**
**A-4017 Linz (AT)**

(72) Erfinder : **Poledna, Stefan**
**Untere Augartenstrasse 36/11**
**A-1020 Wien (AT)**

(74) Vertreter : **Matschnig, Franz, Dipl.-Ing.**
**Siebensterngasse 54**
**A-1070 Wien (AT)**

(54) **Mehrcomputersystem.**

(57) Ein Mehrcomputersystem besteht aus mehreren, an einen Kommunikationsbus (7) angeschalteten, maskenprogrammierten Mikrocomputern (1 bis 6), wobei zumindest einem Mikrocomputer (1) über einen lokalen Speicherbus (8) ein lokaler externer Speicher (12) zugeordnet ist. Hierbei weisen alle Mikrocomputer (1 bis 4) identische Maskenprogrammierung auf und das System ist durch Hinzufügen weiterer Mikrocomputer (5, 6) mit eben diesem Maskenprogramm erweiterbar, jeder Mikrocomputer (1 bis 6) enthält ein in seinem Maskenprogramm enthaltenes, dynamisch konfigurierbares Betriebssystem (23) mit einer Konfigurationszuordnungstabelle (21), der (die) externe(n) Speicher (12) des oder der Mikrocomputer(s) (1) enthält (enthalten) eine Konfigurationstabelle (17) sowie ein Applikationsprogramm (16), wobei jede Konfigurationstabelle (17) aus einem Adreßdatenbereich (18), einem Fixdatenbereich (19) und einem variablen Datenbereich (20) besteht und mittels der Konfigurationszuordnungstabelle (21) ist aus der jeweils festgestellten Kommunikationsadresse die Adresse der Konfigurationstabelle (17) ermittelbar.

EP 0 448 546 A2

Jouve, 18, rue Saint-Denis, 75001 PARIS

STEUERUNG FÜR FAHRERLOSE TRANSPORTSYSTEME

Fig. 1   SYSTEMÜBERSICHT

Fig. 5   PROGRAMMSPEICHERAUFTEILUNG

Die Erfindung bezieht sich auf ein Mehrcomputersystem, bestehend aus mehreren, an einen Kommunikationsbus angeschalteten, maskenprogrammierten Mikrocomputern wobei zumindest einem Mikrocomputer über einen lokalen Speicherbus ein lokaler externer Speicher zugeordnet ist, sowie auf ein Verfahren zum Anpassen eines maskenprogrammierten Mikrocomputers an in der Maske nicht enthaltene Applikationen im Rahmen eines aus identischen, maskenprogrammierten Mikrocomputern bestehenden Systems.

Solche Mehrcomputersysteme können als Steuerungssysteme sehr vielseitig eingesetzt werden, wobei mehrere Nachteile einer Steuerung mit nur einem Mikrocomputer, der keine Systemerweiterungsmöglichkeiten aufweist, eliminiert werden können. Diese Nachteile bestehen im wesentlichen in einer begrenzten Leistungsfähigkeit, die erst durch teure und zeitaufwendige Änderungen des Grundkonzepts verbessert werden kann und sich in Beschränkungen bezüglich der Antwortzeit auf Ereignisse, der Programm- und Datenspeicher und der Anzahl der Ein- und Ausgänge zeigt. Bei Mehrcomputersystemen können die Steuerungen hingegen von ihrer Hard- und Software so ausgelegt werden, daß die Grundfunktionen sowohl von einem als auch von mehreren Mikrocomputern bei einer entsprechenden Steigerung der Leistungsfähigkeit ausgeführt werden.

Es können beispielsweise für die Steuerung fahrerloser Transportfahrzeuge mehrere, miteinander über einen Kommunikationsbus verbundene Mikrocomputer der Reihe nach wie folgt vorgesehen werden:

ein Computer für die Fahrzeugsteuerung und Kontrolle; ein weiterer für die Kommunikation mit einer Bodenstation oder einem ähnlichen Koordinationssystem; zwei andere zusätzliche für die Lenkregelung bzw. Geschwindigkeitsregelung sowie zwei weitere zusätzliche zur Erweiterung für Signalisierungs- bzw. Spezialzwecke des aus den vier Mikrocomputern bestehenden Grundsystems. Sollen solche Erweiterungen durchgeführt werden, die im übrigen auch kundenspezifisch sein können, so ergibt sich das Problem der Betriebssystemübertragung bei der Integration. Wird dem Kunden kein Verwaltungsprogramm (Betriebssystem) zur Ankopplung an die bestehenden Mikrocomputer angeboten, so ist der Aufwand zur Ankopplung groß.

Wird das Verwaltungsprogramm (Betriebssystem) dem Kunden ausgeliefert, so besteht die Gefahr eines ungewollten "Know-How-Abflusses.

In diesem Zusammenhang sind daher insbesondere die einfachen Erweiterungsmöglichkeiten an kostengünstigen maskenprogrammierten Mikrocomputern erwünscht, wobei alle eingesetzten Mikrocomputer das gleiche Maskenprogramm besitzen und auch die Übergabe des Betriebssystems als maskenprogrammierter Mikrocomputer erfolgt, um einen "Know-How-Abfluß" zu verhindern.

Demgemäß besteht die Aufgabe der vorliegenden Erfindung darin, ein Mehrcomputersystem zu schaffen, welches auf kostengünstige und zuverlässige Weise eine hohe Flexibilität aufweist und insbesondere einfach und anwenderfreundlich erweitert werden kann, bzw. darin, einem Mikrocomputer an in der Maske nicht enthaltene Applikationen anzupassen.

Diese Aufgabe wird mittels eines in Anspruch 1 gekennzeichneten Mehrcomputersystems bzw. einem in Anspruch 4 gekennzeichneten Verfahrens gelöst.

Weitere Merkmale der Erfindung ergeben sich aus den abhängigen Unteransprüchen.

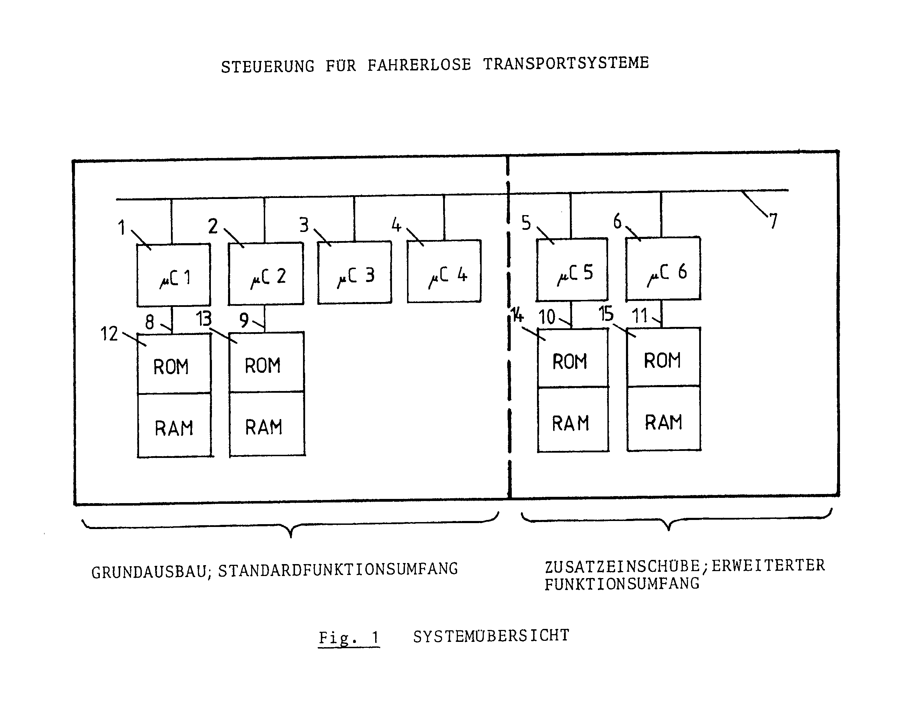

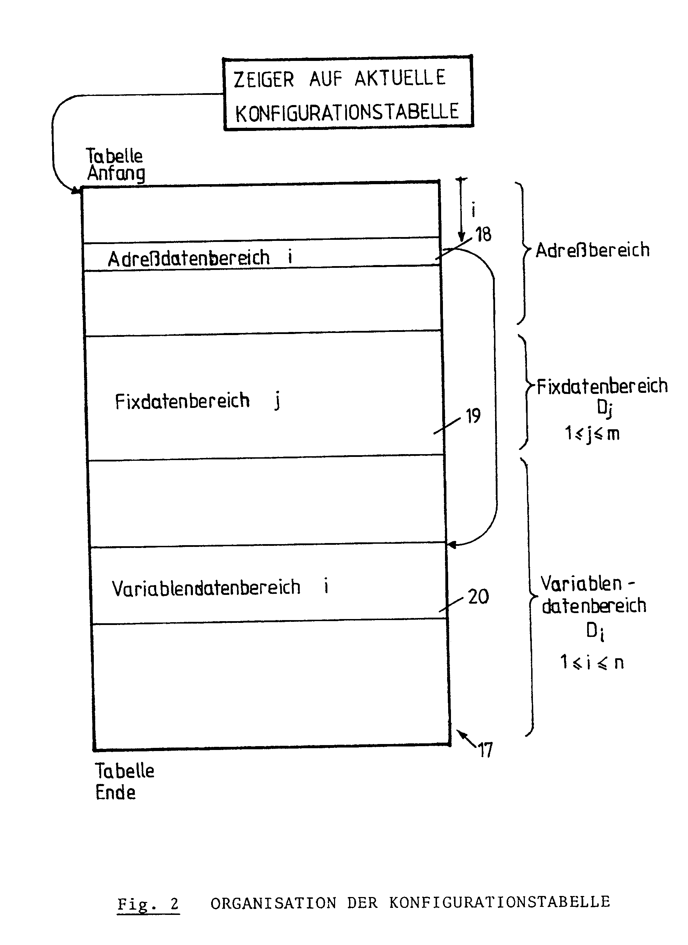

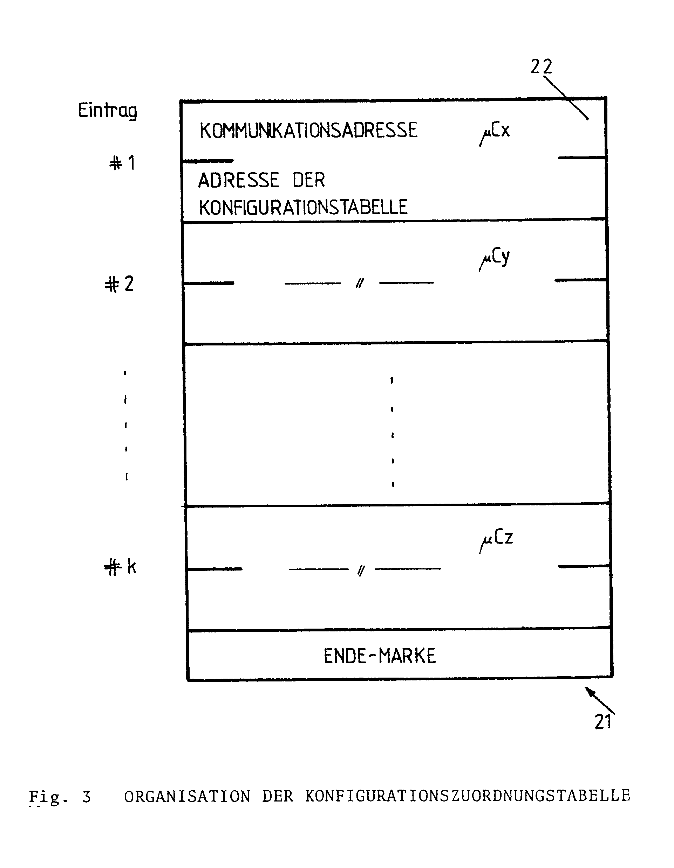

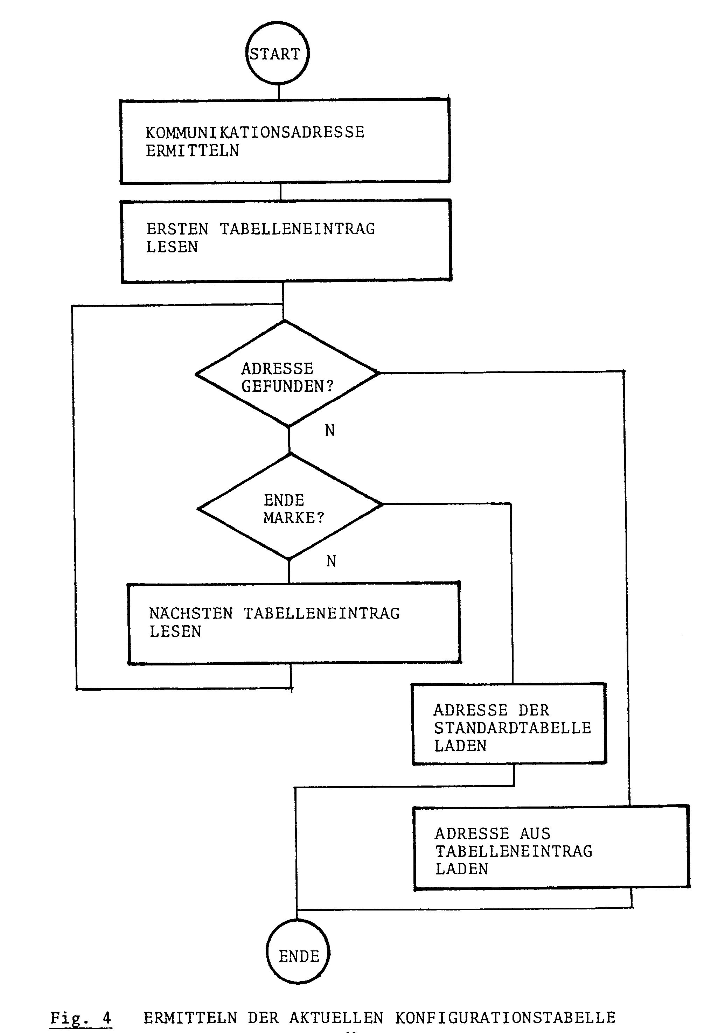

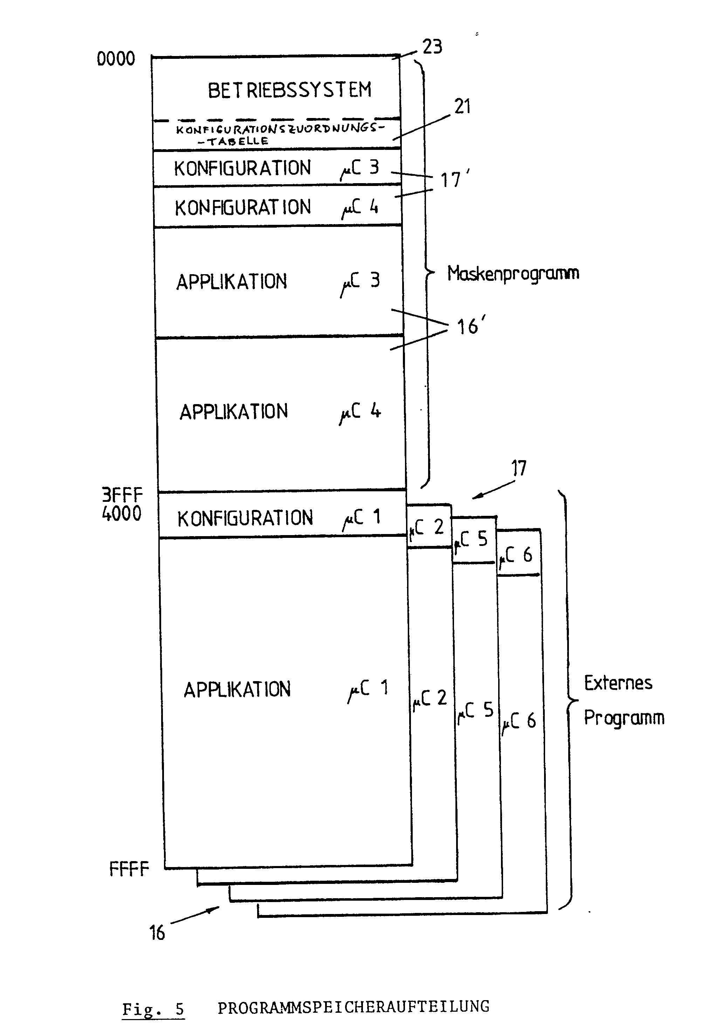

Die Erfindung ist im folgenden an Hand eines Ausführungsbeispiels näher erläutert, das in der Zeichnung veranschaulicht ist. In dieser Zeigen Fig. 1 eine schematische Systemübersicht in Form eines Blockschaltbildes, Fig. 2 die Organisation einer Konfigurationstabelle, Fig. 3 die Organisation einer Konfigurationszuordnungstabelle, Fig. 4 ein schematisches Ablaufdiagramm zum Ermitteln der aktuellen Adresse der Konfigurationstabelle und Fig. 5 eine Programmspeicheraufteilung in einen Maskenprogramm- und einen externen Programmbereich.

Wie aus Fig. 1 ersichtlich, weist das Mehrcomputersystem gemäß der Erfindung einen dem Standardfunktionsumfang entsprechenden Grundausbauteil auf, der in dem hier gezeigten Beispiel aus vier Mikrocomputern 1 bis 4 besteht. Ein solches Mehrcomputersystem kann beispielsweise, wie eingangs näher erläutert, zur Steuerung fahrerloser Transportfahrzeuge dienen oder ganz allgemein ein Steuerungssystem darstellen, bei welchem eine einfache Systemerweiterungsmöglichkeit bestehen soll. Zum Erweitern des Funktionsumfanges dienen weitere Mikrocomputer 5, 6 als Zusatzeinschübe, die über einen Kommunikationsbus 7 mit den Mikrocomputern 1 bis 4 in dem Grundausbauteil verbunden sind. Ferner sind in diesem System auch lokale Speicherbusse 8 bis 11 vorgesehen, die zum Zugreifen auf lokale, externe Speicher 12 bis 15 dienen, die Lese- sowie Schreib-Lesespeicher (ROM/RAM) sind, wobei solche externe Speichermöglichkeiten nicht über jeden Mikrocomputer bestehen müssen (siehe 3, 4). Der Kommunikationsbus 7 erlaubt eine Punkt zu Punkt Kommunikation zwischen allen an den Kommunikationsbus 7 angeschlossenen Mikrocomputern 1 bis 6. Der Kommunikationsbus 7 ermöglicht es allen Mikrocomputern 1 bis 6 während der Initialisierungsphase die eigene Kommunikationsadresse festzustellen. Der Datenaustausch wird mittels sogenannter Nachrichten durchgeführt; die Bedeutung der Daten innerhalb einer Nachricht und die Reihenfolge der Nachrichten werden durch eine Datenaustauschvorschrift (Protokoll) festgelegt.

Durch die Verwendung und Anpassung von maskenprogrammierten Mikrocomputern in dem in der Fig. 1 gezeigten System ergeben sich, beispielsweise für ein mikrocomputergesteuertes, fahrerloses Transportfahrzeug folgende Vorteile:

a) Preiswertes Grundgerät durch Einsatz kostengünstiger masken-programmierter Mikrocomputer, wobei gleich zeitig höhere Stückzahlen erreicht werden können, da alle eingesetzten Mikrocomputer das gleiche Maskenprogramm haben.

b) Einfache und kostengünstige Realisierung von kundenspezifischen Erweiterungen; das Grundgerät kann leicht um einen oder mehrere Mikrocomputer erweitert werden, wobei die vorhandenen maskenprogrammierten Mikrocomputer eingesetzt werden können.

c) Die kundenspezifischen Erweiterungen können auch vom Kunden programmiert werden, da er mittels des maskenprogrammierten Mikrocomputers einen leicht in das System einzubindenden Grundbaustein hat, der ihn vom Verwaltungsaufwand eines Multi-Mikro computersystems befreit.

d) Bei der Programmierung durch den Kunden stellt die Übergabe des Betriebssystems als maskenprogrammierter Mikrocomputer eine sehr sichere Form dar. Sicher im Sinne der Vermeidung eines unkontrollierten "Know-How-Abflusses"; die Programmierung eines Betriebssystems dieser Größenordnung erfordert einen beträchtlichen finanziellen Aufwand.

Wie die Anpassung von Mikrocomputern in dem Schema nach Fig. 1 erfindungsgemäß erfolgt, wird im folgenden an Hand der weiteren Figuren erläutert.

Der anwendungsspezifische Teil (Applikation) eines Programmes für einen Mikrocomputer bedarf einer Beschreibung wie ein Applikationsprogramm 16 durch das Betriebssystem 23 zu verwalten ist. Die Information zu dieser Beschreibung wird gemäß der Erfindung in einer für alle Applikationsprogramme gleich organisierten Konfigurationstabelle 17 automatisch aus dem Applikationsprogramm erzeugt, deren Aufbau in Fig. 2 gezeigt ist. Die Konfigurationstabelle 17 läßt sich demgemäß in mehrere Bereiche gliedern, von denen ein Adreßdatenbereich 18 die Anfangsadressen der Dateneinträge mit variabler Länge $1 \leq i \leq n$, ein Fixdatenbereich 19 alle Dateneinträge mit fester Länge $D_j$; $1 \leq j \leq m$ und ein variabler Datenbereich 20 alle Dateneinträge mit variabler Länge $D_i$; $1 \leq i \leq n$ enthalten. Die applikationsprogrammspezifischen Verwaltungsdaten finden sich in den Datenbereichen $D_i$ und $D_j$, wobei der Zugriff unabhängig von der Größe der einzelnen Dateneinträge ist.

Eine weitere Organisationsform gemäß der Erfindung zeigt Fig. 3, nach der im allgemeinen mehrere, hier k Einträge von Adressen sowie eine Ende-Marke in Form einer Konfigurationszuordnungstabelle 21 zusammengefaßt sind, wobei jeder Eintrag zweigeteilt ist und aus einer Kommunikationsadresse 22 sowie aus der zugehörigen Adresse der Konfigurationstabelle 17 besteht. Die Konfigurationszuordnungstabelle 21 betrifft unmittelbar den Verwaltungsteil des Programmes, da sie einen Teil des Betriebssystems 23 darstellt. Zum dynamischen Konfigurieren jedes Mikrocomputers wird die aktuelle Adresse der Konfigurationstabelle 17 aus der Konfigurationszuordnungstabelle 21 in Abhängigkeit von der Kommunikationsadresse 22 bestimmt, wobei die Kommunikationsadresse 22 über den Kommunikationsbus 7 oder anderer Hardwarebeschaltung festgestellt wird.

Ein Flußdiagramm zum Ermitteln der aktuellen Konfigurationstabelle zeigt Fig. 4. Wie ersichtlich, erfolgt ein Laden der Adresse derart, daß nach Feststellen der Kommunikationsadresse der erste Tabelleneintrag der Konfigurationszuordnungstabelle 21 gelesen und bei Übereinstimmen der festgestellten Kommunikationsadresse mit der aus dem Tabelleneintrag ermittelten Kommunikationsadresse diese Adresse als aktuelle Adresse der Konfigurationstabelle verwendet wird, anderenfalls geprüft wird, ob die Ende-Marke gefunden wurde und in diesem Fall die Adresse der im externen Speicher befindlichen Konfigurationstabelle in Fig. 4 mit "Standardtabelle" bezeichnet, geladen wird. Auf diese Weise entsteht eine Programmschnittstelle zwischen Application und Betriebssystem, die durch die jeweilige Konfigurationstabelle gegeben ist, wobei das in dem Maskenprogramm enthaltene Betriebssystem 23 durch ein solches dynamisches Konfigurieren universell einsetzbar wird.

Eine Programmspeicheraufteilung des in Fig. 1 gezeigten Mehrcomputersystems veranschaulicht die Stellung des Betriebssystems 23 in dem Maskenprogrammbereich und der funktionserweiternden Programme der Mikrocomputer 5, 6 in dem externen Programmbereich des Aufteilungsschemas nach Fig. 5, wobei in dem hier gezeigten Beispiel der hexadezimale Adreßbereich 0 bis 3FFF für das Maskenprogramm und der Adreßbereich von 4000 bis FFFF für externe Programme und/oder Daten genutzt wird. Die Konfigurationszuordnungstabelle wird bei der Erstellung des Maskenprogrammes automatisch generiert und setllt einen Teil des Betriebssystems 23 dar, das mit Hilfe einer Konfigurationstabelle das jeweilige Applikationsprogramm verwaltet, wobei ein externes Programm eines Mikrocomputers keine Betriebssystemanteile aufweist.

Die Funktionen, die in dem Maskenprogramm enthalten sind, lassen sich folglich nach folgendem Schema zusammenfassend auflisten:

a) Das Betriebssysstem 23, das mit Hilfe einer Konfigurationstabelle das jeweilige Applikationsprogramm verwaltet.

b) Die Konfigurationszuordnungstabelle 21, die ein Teil des Betriebssystems 23 ist und bei der Erstellung des Maskenprogrammes automatisch generiert wird.

c) Die Konfigurationstabelle, welche das Applikationsprogramm des Mikrocomputers 3 beschreibt und automatisch aus dem Applikationsprogramm des µC3 generiert wird.

d) Die Konfigurationstabelle, welche das Applikationsprogramm des Mikrocomputers 4 beschreibt und automatisch aus dem Applikationsprogramm des µC4 generiert wird.

e) Das Applikationsprogramm für den Mikrocomputer 3.

f) Das Applikationsprogramm für den Mikrocomputer 4.

Das externe Programm jedes Mikrocomputers, das keine Betriebssystemanteile enthält und sich dadurch von dem Maskenprogramm unterscheidet, besteht dabei aus folgenden Teilen:

g) Die Konfigurationstabelle, welche das Applikationsprogramm des Mikrocomputers 1, 2, 5 oder 6 beschreibt, welche automatisch aus dem jeweiligen Applikationsprogramm generiert wird.

h) Das Applikationsprogramm für den Mikrocomputer 1, 2 5 oder 6.

Es ist anzumerken, daß die in den Maskenprogrammen enthaltenen Applikationsprogramme bzw. Konfigurationstabellen in Fig. 5 und in den Ansprüchen mit 16' bzw. 17' bezeichnet sind, um sie von den Applikationsprogrammen bzw. Konfigurationstabellen der externen lokalen Speicher 12, 13, 14, 15 zu unterscheiden.

## Patentansprüche

1. Mehrcomputersystem, bestehend aus mehreren, an einen Kommunikationsbus (7) angeschalteten, maskenprogrammierten Mikrocomputern (1 bis 6), wobei zumindest einem Mikrocomputer (1) über einen lokalen Speicherbus (8) ein lokaler externer Speicher (12) zugeordnet ist, dadurch gekennzeichnet, daß alle Mikrocomputer (1 bis 4) identische Maskenprogrammierung aufweisen und das System durch Hinzufügen weiterer Mikrocomputer (5, 6) mit eben diesem Maskenprogramm erweiterbar ist, jeder Mikrocomputer (1 bis 6) ein in seinem Maskenprogramm enthaltenes, dynamisch konfigurierbares Betriebssystem (23) mit einer Konfigurationszuordnungstabelle (21) enthält, der (die) externe(n) Speicher (12) des oder der Mikrocomputer(s) (1) eine Konfigurationstabelle (17) sowie ein Applikationsprogramm (16) enthält (enthalten), wobei jede Konfigurationstabelle (17) aus einem Adreßdatenbereich (18), einem Fixdatenbereich (19) und einem variablen Datenbereich (20) besteht und mittels der Konfigurationszuordnungstabelle (21) aus der jeweils festgestellten Kommunikationsadresse die Adresse der Konfigurationstabelle (17) ermittelbar ist.

2. Mehrcomputersystem nach Anspruch 1, dadurch gekennzeichnet, daß das für alle Mikrocomputer (1 bis 6) identische Maskenprogramm zusätzlich Konfigurationstabellen (17') und Applikationsprogramme (16') für im System enthaltene Mikrocomputer (3, 4) enthält, denen kein eigener externer Speicher zugeordnet ist, wobei jede Konfigurationstabelle (17') aus einem Adreßdatenbereich (18), einem Fixdatenbereich (19) und einem variablen Datenbereich (20) besteht und mittels der Konfigurationszuordnungstabelle (21) aus der jeweils festgestellten Kommunikationsadresse die Adresse der Konfigurationstabelle (17') ermittelbar ist.

3. Mehrcomputersystem nach Anspruch 1 oder 2, dadurch gekennzeichnet, daß die Konfigurationszuordnungstabelle (21) jedes Mikrocomputers (1) aus k Einträgen und einer Ende-Marke besteht, wobei jeder Eintrag zweigeteilt ist und aus einer Kommunikationsadresse (22) sowie aus der zugehörigen Adresse der Konfigurationstabelle (17, 17') besteht.

4. Verfahren zum Anpassen eines maskenprogrammierten Mikrocomputers an in der Maske nicht enthaltene Applikationen im Rahmen eines aus identischen, maskenprogrammierten Mikrocomputern bestehenden Systems, dadurch gekennzeichnet, daß das System durch weitere, identisch maskenprogrammierte Mikrocomputer (5, 6) erweitert wird, wobei jeder Mikrocomputer (1 bis 6) in seinem Maskenprogramm ein dynamisch konfigurierbares Betriebssystem (23) mit einer Konfigurationzuordnungstabelle (21) enthält, dieses Betriebssystem (23) für jeden Mikrocomputer (1 bis 6) verwendet wird, nach Feststellen der Kommunikationsadresse der erste Tabelleneintrag der Konfigurationszuordnungstabelle (21) gelesen und bei Übereinstimmen der festgestellten Kommunikationsadresse mit der aus dem Tabelleneintrag ermittelten Kommunikationsadresse die aus dem Tabelleneintrag ermittelte Adresse der Konfigurationstabelle als aktuelle Adresse der Konfigurationstabelle (17, 17') verwendet wird, anderenfalls geprüft wird, ob die Ende-Marke gefunden wurde und in diesem insbesondere bei Erweiterung des Systems auftretenden Fall die Adresse der in einem jedem zusätzlichen Mikrocomputer (5, 6) zugeordneten, externen Speicher befindlichen Konfigurationstabelle (17) geladen wird und
andernfalls das Verfahren mit nächstem Tabellen-Eintrag auf obig beschriebene Art fortgesetzt wird.

STEUERUNG FÜR FAHRERLOSE TRANSPORTSYSTEME

Fig. 1    SYSTEMÜBERSICHT

EP 0 448 546 A2

ZEIGER AUF AKTUELLE
KONFIGURATIONSTABELLE

Tabelle
Anfang

Adreßdatenbereich i

Fixdatenbereich j

Variablendatenbereich i

i
18

Adreßbereich

19

Fixdatenbereich
$D_j$
$1 \leqslant j \leqslant m$

20

Variablen -
datenbereich
$D_i$
$1 \leqslant i \leqslant n$

17

Tabelle
Ende

Fig. 2   ORGANISATION DER KONFIGURATIONSTABELLE

Eintrag

22

| | |
|---|---|
| KOMMUNIKATIONSADRESSE | μCx |

#1

ADRESSE DER
KONFIGURATIONSTABELLE

| | |
|---|---|
| —— —— // —— | μCy |

#2

⋮ ⋮

| | |
|---|---|
| —— —— // —— | μCz |

#k

ENDE-MARKE

21

Fig. 3    ORGANISATION DER KONFIGURATIONSZUORDNUNGSTABELLE

9

Fig. 4    ERMITTELN DER AKTUELLEN KONFIGURATIONSTABELLE

Fig. 5    PROGRAMMSPEICHERAUFTEILUNG